# EUROPÄISCHE PATENTSCHRIFT

(11) **EP 3 953 661 B1**
(45) Veröffentlichungstag und Bekanntmachung des Hinweises auf die Patenterteilung: **26.10.2022**
(21) Anmeldenummer: 20718298.1
(22) Anmeldetag: 08.04.2020
(51) Int. Cl.: G01B 15/06, G01M 17/007

(54) **VERFAHREN UND COMPUTERPROGRAMM ZUM ZEITAUFGELÖSTEN BERECHNEN EINER DEFORMATION EINES KÖRPERS**
METHOD AND COMPUTER PROGRAM FOR THE TIME-RESOLVED CALCULATION OF A DEFORMATION OF A BODY
PROCÉDÉ ET PROGRAMME INFORMATIQUE DESTINÉS AU CALCUL À RÉSOLUTION TEMPORELLE D'UNE DÉFORMATION D'UN CORPS

(30) Priorität: 12.04.2019 DE 102019109789
(43) Veröffentlichungstag der Anmeldung: 16.02.2022
(73) Patentinhaber: Fraunhofer-Gesellschaft zur Förderung der angewandten Forschung e.V., 80686 München (DE)
(72) Erfinder: HIERMAIER, Stefan, 79104 Freiburg (DE); HANKE, Randolf, 90768 Fürth (DE); NAU, Siegfried, 79104 Freiburg (DE); MOSER, Stefan, 79104 Freiburg (DE); UHLMANN, Norman, 90768 Fürth (DE); FRITSCH, Jens, 97104 Freiburg (DE); KURFISS, Malte, 79104 Freiburg (DE); BEHREND, Rolf, 90768 Fürth (DE); BUTZ, Ines, 79104 Freiburg (DE)
(74) Vertreter: 2SPL Patentanwälte PartG mbB
(86) Internationale Anmeldenummer: PCT/EP2020/060096
(87) Internationale Veröffentlichungsnummer: WO 2020/208111

(56) Entgegenhaltungen:
- DE-A1-102005 027 252
- DE-A1-102007 047 810
- JORDAN E H ET AL: "Microradiographic strain measurement using markers", EXPERIMENTAL MECHANICS, SPRINGER NEW YORK LLC, US, Bd. 34, Nr. 2, 1. Juni 1994 (1994-06-01), Seiten 155-165, XP008169244, ISSN: 0014-4851, DOI: 10.1007/BF02325712

## Beschreibung

### Technisches Gebiet

Ausführungsbeispiele befassen sich mit einem Verfahren zum zeitaufgelösten Berechnen einer Deformation eines Körpers und mit einem entsprechenden Computerprogramm, sowie mit einem System zum Erstellen einer Mehrzahl von Röntgenaufnahmen.

### Hintergrund

Bei der Einführung neuer Fahrzeugmodelle/-generationen werden sowohl im Rahmen von Typgenehmigungsverfahren als auch durch unabhängige, verbraucherschutzorientierte Prüfdienstleister (z.B. NCAP, New Car Assessment Programme, Programm zur Bewertung neuer Automobile) mehrere repräsentative Crashtests (engl. "Crash" bedeutet "Zusammenprall") zur Bewertung der passiven Fahrzeugsicherheit durchgeführt. Die durchgeführten Abnahmetests sind die entscheidende Voraussetzung zur Zulassung und Markteinführung wie auch zur Akzeptanz neuer Fahrzeuge.

Diesen Gesamtfahrzeugcrashversuchen gehen umfangreiche experimentelle Untersuchungen aller relevanten Materialien, Einzelkomponenten und Bauteilgruppen voraus, welche entlang des gesamten Entwicklungsprozesses durchgeführt werden. Dieser Prozess wird signifikant von begleitenden Computersimulationen unterstützt, die es erlauben, Vorhersagen über das Verhalten eines virtuellen Bauteils unter mechanischer Belastung zu treffen. Das Fahrzeugverhalten während eines Crashs und folglich dessen Bewertung wird ausschließlich durch die Auslegung energieabsorbierender Strukturen des Fahrzeugs definiert. Folglich ist ein präzises Verständnis des Material- und Bauteilverhaltens im Extremlastfall "Crash" Grundlage der virtuellen Fahrzeugentwicklung. Trotz der enormen Bedeutung prognosefähiger Modelle kommt es im Zuge der integrierten Auslegung zu signifikanten Unterschieden zwischen numerischer Simulation und physikalischem Experiment. Grund hierfür ist der eingeschränkte messtechnische Zugang zu sicherheitskritischen Strukturen, die sich verborgen im Inneren des Fahrzeugs befinden - eine dynamische, bildgebende in-situ Untersuchung ist in diesen Fällen meist nicht möglich.

Um möglichst viele Informationen über die Verformungen und Bewegungen von Bauteilen während jedes einzelnen Crashvorgangs zu gewinnen werden aktuell vor allem optische Hochgeschwindigkeitskameras, Beschleunigungssensoren und Dehnungsmessstreifen eingesetzt. Dehnungsmessstreifen oder Beschleunigungssensoren messen lokal am Applikationsort kontinuierlich die Belastung. Sie müssen aufwändig verkabelt und mit externen Datenaufnahmegeräten verbunden werden, was die nutzbare Anzahl pro Crash-Versuch einschränkt. Die zur Verfügung stehende Sensorik bietet daher keine (optisch) oder nur punktuelle Möglichkeiten (lokale Sensoren), verborgene Komponenten in-situ detailliert zu beobachten. Mithilfe von aufwändigen 3D-DIC (Digital Image Correlation, Digitale Bild-Korrelation) Verfahren können von außen beobachtbare Verformungsprozesse während eines Crashs bereits aufgezeichnet und digitalisiert werden. Eine dynamische, bildgebende in-situ Untersuchung innenliegender Strukturen lässt dieses Auswerteverfahren allerdings nicht zu.

Erweitert wird diese Form der in-situ-Messverfahren durch a-posteriori-Untersuchungen der deformierten Fahrzeugstrukturen. Durch mechanisches Zerlegen, bei dem allerdings Residualspannungen verloren gehen, oder mit Hilfe einer XXL-Computertomographie können zwar wertvolle Informationen über den Endzustand gewonnen werden, ein Rückschluss auf die Dynamik des eigentlichen Verformungsprozesses ist mit diesem Verfahren jedoch nicht möglich.

DE 10 2007 047810 A1 offenbart ein Verfahren zum automatischen Anpassen eines Fahrzeug-Computermodells für Crashsimulationen.

Damit stellt sich die Aufgabe, ein Analyseverfahren bereitzustellen, das auch eine Analyse von innenliegenden Komponenten ermöglicht.

### Zusammenfassung

Die Erfindung basiert auf der Erkenntnis, dass sich eine Mehrzahl von Röntgenaufnahmen von Körpern, die sich im Prozess der Deformation befinden, anfertigen lassen, etwa durch eine Nutzung einer Mehrzahl von Röntgenblitzen oder durch eine Nutzung einer gepulsten Röntgenquelle, wie etwa einem Linearbeschleuniger. Werden dadurch Röntgenpulse erzeugt, so lassen sich Röntgenbilder davon durch Verwenden eines Flächendetektors mit geeigneter Orts- und Zeitauflösung aufnehmen, etwa durch Abfilmen eines geeigneten Szintillators durch eine Hochgeschwindigkeitskamera aufnehmen. Dabei können die Röntgenpulse einen ausreichend geringen Abstand und/oder eine ausreichend geringe Dauer aufweisen, um Bewegungsunschärfe zu vermeiden. Diese Mehrzahl von Röntgenbildern kann nun genutzt werden, um eine Deformation eines Körpers nachzuvollziehen. Dazu wird ein Deformations-Modell des Körpers berechnet, also ein Modell, das abbildet, wie sich der Körper voraussichtlich bewegen und deformieren wird. Basierend darauf wird eine Darstellung des Körpers auf Röntgenbildern vorhergesagt, indem der Körper, die Röntgenquelle und der Szintillator in einer Simulation zueinander in Beziehung gesetzt werden. Dieses vorhergesagte Röntgenbild wird mit einem tatsächlich aufgenommenen Röntgenbild verglichen, Abweichungen werden festgestellt und genutzt, um das Modell zu modifizieren. Dann wird das modifizierte Modell genutzt, um das nächste Röntgenbild vorherzusagen, das wiederum mit dem nächsten tatsächlich gemessenen Röntgenbild verglichen wird. Über eine Mehrzahl von Zeitpunkten werden eine Mehrzahl von vorhergesagten Röntgenbildern so mit einer Mehrzahl von gemessenen Röntgenbildern verglichen und so das Modell der Deformation nach und nach der eigentlichen Deformation angeglichen. Nach Durchführung des Verfahrens steht so ein Modell der tatsächlichen Deformation des Körpers zu Verfügung, das genutzt werden kann, um Schwachstellen des Körpers zu identifizieren.

Das entwickelte Messsystem und Auswerteverfahren setzt an Fragestellungen und technischen Problemen an, welche für bisher verfügbare bildgebende oder andere messtechnische Verfahren nicht zugänglich sind. Hierdurch können Potenziale durch eine verbesserte Auslegung von Komponenten mit reduzierten Sicherheitsmargen bei gleicher technischer Leistung erschlossen werden. Ferner umfasst dies Stabilitäts- und Verzweigungsprobleme in lasttragenden Strukturen im Innern des Fahrzeugs sowie von multiplen Airbags verdeckte Bewegung von Dummys und den sie umgebenden Innenraumstrukturen.

Zumindest manche Ausführungsbeispiele schaffen dabei eine örtliche Auflösung von weniger als einem mm, und eine (hochgerechnete) zeitliche Auflösung von 1.000 Bilder pro Sekunde. Um eine ausreichende Detailtiefe und Materialtrennung für komplexe Strukturen wie die in Fahrzeugen verbauten Komponenten zu erreichen, wird im entwickelten System eine Strahlungsquelle mit einer Energie von bis zu 9 MeV genutzt. Dies bedingt umfangreiche Vorkehrungen baulicher wie personeller Art im Strahlenschutz.

In Experimenten wurde die Eignung der bildgebenden Röntgentechnologie zur Analyse der dynamischen Prozesse, die bei einem Crash stattfinden, erstmalig nachgewiesen: Mittels Röntgenblitztechnik (bei 450 keV) wurden bis zu vier zeitlich aufeinanderfolgende Aufnahmen während eines Crashversuchs gewonnen. Die Anzahl der Aufnahmen ist durch die kommerziell verfügbare Röntgenblitzquelle begrenzt, die prinzipiell maximal acht Aufnahmen aus einem Blickwinkel zulässt. Alternativ können allerdings andere Röntgenquellen verwendet werden, wie etwa gepulste Linearbeschleuniger.

Ausführungsbeispiele schaffen somit ein Verfahren zum zeitaufgelösten Berechnen einer Deformation eines Körpers. In dieser Anmeldung umfasst die Deformation eines Körpers die Veränderung einer Form des Körpers oder einer Form eines Teils des Körpers, etwa durch Veränderung der Außen- und ggf. Innenkonturen eines Körpers, und, optional, auch eine Translation und/oder eine Rotation des Körpers bezüglich eines Ursprungs und/oder Drehpunkts, etwa in Form einer "formerhaltenden Deformation". Dabei kann die Deformation beispielsweise volumenerhaltend sein. In anderen Worten wird in zumindest einigen Ausführungsbeispielen neben der Änderung der Form auch eine "formerhaltende Deformation", d.h. Translation und Rotation, unter dem Begriff Deformation verstanden. Das Verfahren umfasst ein Berechnen eines Modells des Körpers während der Deformation. Das Verfahren umfasst ferner ein Berechnen eines vorhergesagten Röntgenbildes für den Körper für eine Mehrzahl von Zeitpunkten während der Deformation basierend auf dem Modell. Das Verfahren umfasst ferner ein Erhalten je eines gemessenen Röntgenbildes des Körpers für die Zeitpunkte während der Deformation. Das Verfahren umfasst ferner ein Modifizieren des Modells basierend auf den vorhergesagten Röntgenbildern und den gemessenen Röntgenbildern. Dieses Merkmal kann auch aus "Datenassimilation" bezeichnet werden, d.h. das Modell wird basierend auf den gemessenen Röntgenbildern angepasst, d.h. assimiliert. Durch dieses Verfahren wird die erfindungsgemäße Aufgabe gelöst.

In zumindest manchen Ausführungsbeispielen können für jeden Zeitpunkt der Mehrzahl von Zeitpunkten mehrere vorhergesagte Röntgenbilder und mehrere gemessene Röntgenbildern aus unterschiedlichen Perspektiven genutzt werden. Dies ermöglicht eine genauere Adaption des Modells, da markante Punkte des Modells aus unterschiedlichen Perspektiven mit Hilfe von Merkmalen auf den vorhergesagten und gemessenen Röntgenbildern verfolgt werden können.

Beispielsweise kann das Modell des Körpers während der Deformation basierend auf einer voraussichtlichen Krafteinwirkung auf den Körper während der Deformation berechnet werden. Die voraussichtliche Krafteinwirkung kann als Parameter einer Simulation des Modells verwendet werden. Eine Krafteinwirkung ist in einer FE-Simulation dasjenige, was den Körper verformt. Wenn der Körper so deformiert wird, dass die 3D-Verschiebungen, die in der Datenassimilation bestimmt werden, durch den deformierten Körper erfüllt werden, ist die Verwendung von künstlichen Zwangskräften eine der Möglichkeiten, diese Verformung physikalisch zumindest annäherungsweise zu erreichen bzw. virtuell herbeizuführen. Gleichzeitig kann die Ableitung einer "Zwangsenergie", d.h. diese Zwangskraft den Weg, um den der Körper verformt wird, als quantitativer Maßstab für die Abweichung zwischen dem Experiment, also den gemessenen Röntgenbildern, (bzw. der Form, die der Körper laut Ergebnis der Analyse haben soll) und Simulation, also dem Modell, dienen. In anderen Worten kann, wenn der Körper oder ein Teil des Körpers um einen gewissen Winkel rotiert wird (eine formerhaltende Deformation), dafür i.d.R. eine relativ kleine Kraft benötigt werden, die dafür aufgewendete Energie ist klein. Wenn der Körper oder ein Teil des Körpers gestaucht wird, kann die dafür notwendige Kraft sehr hoch sein. Die dafür aufzuwendende Energie ist im Vergleich sehr groß. Damit ist die Variante der Rotation - wenn sie mit den gemessenen Bildern in Übereinklang zu bringen ist - zu bevorzugen, weil sie geringere "Kosten" hat. Beides sind Wege, die Verformung eines Körpers per Simulation zu berechnen. Die Krafteinwirkung ist dabei ein wesentlicher Parameter. Dabei können auch andere Metriken genutzt werden, aber die Betrachtung der (Zwangs)-Kräfte bietet Vorteile.

In zumindest einigen Ausführungsbeispielen wird bei dem Berechnen des vorhergesagten Röntgenbildes eine Modifikation des Modells, die auf einem Röntgenbild eines vorherigen oder nachfolgenden Zeitpunkts basiert, einbezogen. Dabei kann die Analyse beispielsweise nach dem Ende des Experiments durchgeführt werden, bei dem uns sowohl alle Zeitschritte der Simulation, als auch zu allen vorgegebenen Zeitpunkten während des Experiments erfassten Röntgenbilder vorliegen. So kann die Richtung entlang des Zeitstrahls, in der die Analyse durchgeführt wird, frei gewählt werden. Es kann in manchen Ausführungsbeispielen die Mehrzahl von Zeitpunkten rückwärts (d.h. von dem neusten ausgehend) durchschritten werden, etwa falls als Startwert eine CT-Aufnahme (Computertomographie-Aufnahme) eines gecrashten Autos genutzt wird. Alternativ kann die Mehrzahl von Zeitpunkten vorwärts (d.h. chronologisch) durchschritten werden. Alternativ können alle Zeitpunkte gleichzeitig betrachtet werden, etwa bei Verwendung eines Smoothing-Verfahrens (Glättungsverfahren) in der Datenassimilation.

In manchen Fällen kann das Modell für einen nachfolgenden Zeitpunkt der Mehrzahl von Zeitpunkten erst berechnet werden, wenn die Modifikation des Modells, die auf einem Röntgenbild es vorherigen Zeitpunkt basiert, durchgeführt ist. Dies ermöglicht eine graduelle Verkleinerung eines Unterschieds zwischen dem vorhergesagten Röntgenbild und dem gemessenen Röntgenbild.

In Ausführungsbeispielen kann das Modell basierend auf einem Unterschied zwischen vorhergesagten Positionen von Merkmalen auf den vorhergesagten Röntgenbildern und gemessenen Positionen von entsprechenden Merkmalen auf den gemessenen Röntgenbildern modifiziert werden. Die Merkmale können dabei als Referenzpunkte der Modifikation genutzt werden.

Beispielsweise kann zumindest ein Teil der Merkmale durch Röntgen-Marker gebildet werden. Röntgenmarker lassen sich beispielsweise an flächigen Komponenten des Körpers anbringen, die nicht ohne weiteres aufgrund ihrer Kontur erkennbar sind.

Zumindest ein Teil der Merkmale kann durch Konturen von Komponenten des Körpers gebildet werden. Dies ermöglicht es, die Deformation des Körpers möglichst ohne Modifikationen (etwa durch Marker) zu erfassen und so eine Genauigkeit der Analyse zu erhöhen.

Dabei kann das Verfahren beispielsweise ein Berechnen einer durch die Deformation des Körpers verursachten Translation und/oder Rotation zumindest eines Teils des Körpers basierend auf dem Unterschied zwischen den vorausgesagten und den gemessenen Positionen der Merkmale umfassen. Die Modifikation des Modells kann auf der berechneten Translation und/oder der berechneten Rotation zumindest eines Teils des Körpers basieren. Durch Translationen und Rotationen kann bereits ein großer Teil der Deformation nachvollzogen werden. Dabei kann eine Gesamtheit der Verschiebungen aller Features, Marker etc. bestimmt werden um den Unterschied zur Simulation zu reduzieren, in dem man im ersten Schritt diese Translation und Rotation des 3D-Körpers verbessert bzw. die von der Simulation vorhergesagte Translation und Rotation so verändert, dass der Unterschied zwischen den projizierten Stellen im gemessenen und vorhergesagten Röntgenbild verringert wird. Die Unterschiede, die dann noch übrig bleiben bzw. durch Translation und Rotation nicht aufgelöst werden können, können durch eine (beispielsweise diesem Schritt nachgeschaltete) Verformung des Körpers oder eines Teils des Körpers reduziert werden.

In manchen Ausführungsbeispielen umfasst das Verfahren ferner ein Berechnen von morphologischen Operatoren für die Deformation des Körpers basierend auf dem Unterschied zwischen den vorausgesagten und den gemessenen Positionen der Merkmale. Die Modifikation des Modells kann auf den berechneten morphologischen Operatoren für die Deformation des Körpers basieren. Morphologische Operatoren können etwa genutzt werden, um Stauchungen oder Expansionen von Komponenten des Körpers abzubilden.

Dabei können beispielsweise morphologische Operatoren zugelassen werden, die sich aus einer Linearkombination von Deformationen ergeben die für vorhergehende oder nachfolgende Zeitpunkte der Mehrzahl von Zeitpunkten berechnet wurden. Beispielsweise können unterschiedliche Linearkombinationen für unterschiedliche Merkmale zugelassen werden. Dies ermöglicht eine Beschränkung des Suchraums in der Berechnung der morphologischen Operatoren.

In Ausführungsbeispielen kann die Deformation des Körpers durch eine numerische Simulation basierend auf a-priori-Wissen über die Deformation und basierend auf den berechneten morphologischen Operatoren berechnet werden. Dabei kann das a-priori-Wissen über die Deformation und die berechneten morphologischen Operatoren genutzt werden, um Zwangskräfte zu berechnen, die auf den Körper einwirken, wobei die numerische Simulation auf den Zwangskräften basiert. Alternativ oder zusätzlich kann das a-priori-Wissen und die berechneten morphologischen Operatoren genutzt werden, um Eingangsparameter der numerischen Simulation in Bezug auf Eigenschaften eines Materials des Körpers, in Bezug auf einwirkende Kräfte, in Bezug auf eine Geometrie des Körpers, und/oder in Bezug auf Geschwindigkeiten anzupassen. Durch die numerische Simulation lässt sich eine höhere Genauigkeit des Modells erreichen.

Beispielsweise kann das Verfahren ein Berechnen eines dreidimensionalen Verschiebungsvektors für die Merkmale durch geometrische Rückprojektion der Merkmale umfassen. Die Modifikation des Modells kann auf dem dreidimensionalen Verschiebungsvektor basieren.

Dies ermöglicht die Modifikation des Modells, da dort dreidimensionale Modifikationen aus zweidimensionalen Beobachtungen gewonnen werden.

Dabei kann die Modifikation des Modells darauf gerichtet sein, den Unterschied zwischen den vorhergesagten Positionen der Merkmale auf den vorhergesagten Röntgenbildern und den gemessenen Positionen der entsprechenden Merkmale auf den gemessenen Röntgenbildern über die Mehrzahl von Zeitpunkten zu reduzieren. Dies ermöglicht einen Effizienzgewinn über die Mehrzahl von Zeitpunkten.

Beispielsweise kann das Modell des Körpers in einer Finite-Elemente-Simulation berechnet werden. Durch den Finite-Elemente-Ansatz lässt sich die Deformation des Körpers berechnen.

Ausführungsbeispiele schaffen ferner ein Programm mit einem Programmcode zum Durchführen des Verfahrens, wenn der Programmcode auf einem Computer, einem Prozessor, einem Kontrollmodul oder einer programmierbaren Hardwarekomponente ausgeführt wird.

In zumindest einigen Ausführungsbeispielen umfasst das Verfahren ferner ein Erstellen der gemessenen Röntgenbilder durch Aufnahme eines Szintillators mit einer optischen Hochgeschwindigkeitskamera. Die gemessenen Röntgenbilder können basierend auf einer Belichtung des Szintillators durch eine (gepulste oder konstante) Strahlungsquelle aufgenommen wurden. Dies ermöglicht eine Erstellung der Röntgenbilder mit einem kurzen zeitlichen Abstand und ohne Bewegungsunschärfe. Dabei basiert die Bewegungsunschärfe u.a. auf der Belichtungszeit, die sich entweder durch die Länge der Röntgenpulse oder durch die Länge der Belichtungszeit der Hochgeschwindigkeitskamera beeinflussen lässt.

Beispielsweise kann die gepulste Strahlungsquelle ein Linearbeschleuniger sein. Ein solcher kann etwa genutzt werden, um eine größere Anzahl von Röntgenpulsen zu erzeugen als eine Röntgenblitzquelle.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
- Fign. 1a und 1b: zeigen Ausführungsbeispiele eines Verfahrens zum zeitaufgelösten Berechnen einer Deformation eines Körpers;
- Fig. 2: zeigt eine Übersicht eines Mess- und Auswerteverfahrens nach einem Ausführungsbeispiel;
- Fig. 3: zeigt ein Ausführungsbeispiel eines Aufbaus eines Systems zum Erstellen einer Mehrzahl von Röntgenaufnahmen; und
- Fig. 4: zeigt eine Illustration der Datenassimilation zur Modifizierung des Modells.

### Beschreibung

Verschiedene Beispiele werden nun ausführlicher Bezug nehmend auf die beiliegenden Figuren beschrieben, in denen einige Beispiele dargestellt sind. In den Figuren können die Stärken von Linien, Schichten und/oder Bereichen zur Verdeutlichung übertrieben sein.

Während sich weitere Beispiele für verschiedene Modifikationen und alternative Formen eignen, sind dementsprechend einige bestimmte Beispiele derselben in den Figuren gezeigt und werden nachfolgend ausführlich beschrieben. Allerdings beschränkt diese detaillierte Beschreibung weitere Beispiele nicht auf die beschriebenen bestimmten Formen. Weitere Beispiele können alle Modifikationen, Entsprechungen und Alternativen abdecken, die in den Rahmen der Offenbarung fallen. Gleiche oder ähnliche Bezugszeichen beziehen sich in der gesamten Beschreibung der Figuren auf gleiche oder ähnliche Elemente, die bei einem Vergleich miteinander identisch oder in modifizierter Form implementiert sein können, während sie die gleiche oder eine ähnliche Funktion bereitstellen.

Es versteht sich, dass, wenn ein Element als mit einem anderen Element "verbunden" oder "gekoppelt" bezeichnet wird, die Elemente direkt, oder über ein oder mehrere Zwischenelemente, verbunden oder gekoppelt sein können. Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht explizit oder implizit anders definiert. Eine alternative Formulierung für die gleichen Kombinationen ist "zumindest eines von A und B" oder "A und/oder B". Das Gleiche gilt, mutatis mutandis, für Kombinationen von mehr als zwei Elementen.

Die Terminologie, die hier zum Beschreiben bestimmter Beispiele verwendet wird, soll nicht begrenzend für weitere Beispiele sein. Wenn eine Singularform, z. B. "ein, eine" und "der, die, das" verwendet wird und die Verwendung nur eines einzelnen Elements weder explizit noch implizit als verpflichtend definiert ist, können weitere Beispiele auch Pluralelemente verwenden, um die gleiche Funktion zu implementieren. Wenn eine Funktion nachfolgend als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei Gebrauch das Vorhandensein der angegebenen Merkmale, Ganzzahlen, Schritte, Operationen, Prozesse, Elemente, Komponenten und/oder einer Gruppe derselben präzisieren, aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

Sofern nicht anderweitig definiert, werden alle Begriffe (einschließlich technischer und wissenschaftlicher Begriffe) hier in ihrer üblichen Bedeutung auf dem Gebiet verwendet, zu dem Beispiele gehören.

Die vorliegende Offenbarung beschreibt ein integrales Mess- und Auswerteverfahren, welches durch die in-situ-Hochgeschwindigkeits-Röntgen-Diagnostik neben der Untersuchung periodischer Prozesse die Möglichkeit bietet, transiente, dynamische (Deformations-)Prozesse verborgener Strukturen kontinuierlich aufzuzeichnen. Basierend auf einer Hochgeschwindigkeits-2D-Röntgenbildgebung und unter Einbezug von 3D-FE-Simulationen (Finite-Elemente), oder allgemein eines Modells eines Körpers während der Deformation, kann das Verfahren in zumindest manchen Ausführungsbeispielen die quantitative Rückspiegelung experimenteller Informationen in die digitale Standard-Entwicklungsumgebung ermöglichen.

Das bildgebende Messverfahren basiert beispielsweise auf einer Nutzung gepulster Röntgenstrahlung bis 9MeV zur Einzelbilderstellung in Kombination mit einem strahlenfesten Detektor. Gegenüber normalen typischen industriellen Röntgenapplikationen mit geringen Bildwiederholraten kann beim Crashtest eine (für typische Röntgenanwendungen extrem) hohe Bildwiederholrate von bis zu 1.000 Bildern pro Sekunde genutzt werden, um die relevanten Verformungsprozesse beim Crash mit ausreichender zeitlichen Auflösung darzustellen. Um Bewegungsunschärfen in der Abbildung schneller Bewegungen zu reduzieren, können neben einer hohen Bildrate zusätzlich die Belichtungszeiten auf einen Bereich von Mikrosekunden reduziert werden. Die Belichtungszeit kann in der vorgesehenen Anwendung durch die gepulste Röntgenquelle (etwa mit einer Pulslänge ca. 4 µs) realisiert werden.

Der im Messverfahren verwendete Flächendetektor umfasst (oder besteht aus) eine sich im Primarstrahl befindenden Szintillatorfläche, welche hinsichtlich ihrer (Strahlungs-)Absorptionseigenschaften, Abklingzeit, Materialdicke und -eigenschaften, auf die hohen Energien und kurzen Belichtungszeiten des Linearbeschleunigers angepasst ist. Die Szintillatorfläche wandelt Strahlung in sichtbares Licht, welches indirekt von einer Hochgeschwindigkeitskamera abgebildet und aufgezeichnet wird (also sog. digital indirekt konvertierender Detektor). Die abbildende Optik ist so gewählt, dass die Strahlenbelastung der Hochgeschwindigkeitskamera minimiert wird. Um größere Objekte (beispielsweise Strukturkomponenten eines Fahrzeugs) dynamisch abzubilden, kann mittels einem modularen Aufbau, etwa bestehend aus dreiseitig kaskadierenden Einzelmodulen, die aktive Detektorfläche vergrößert werden.

Als Ergebnis des Messverfahrens liegen zeitaufgelöste, experimentelle Daten eines dynamischen (Deformations-)Vorgangs in Form eines auf Einzelbilder zu exakt bestimmten Zeitpunkten basierendes "Röntgenvideo" vor, welche gemeinsam mit 3D -FE-Simulationsdaten des beobachteten Vorgangs oder von Teilen des beobachteten Vorgangs die Grundlage für das Auswerteverfahren darstellen. Das Röntgenvideo kann beispielsweise eine Mehrzahl von Röntgenbildern über eine Mehrzahl von Zeitpunkten umfassen.

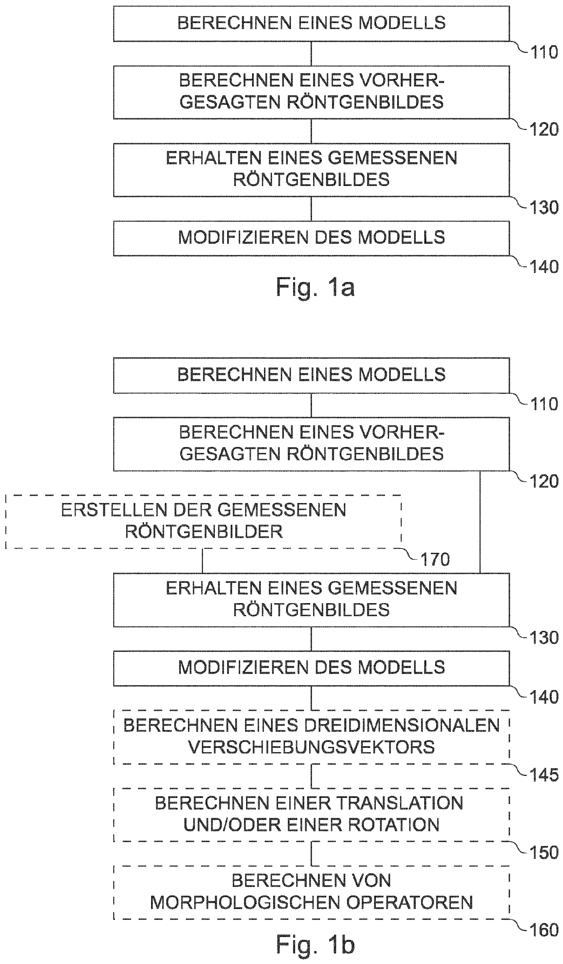

Fign. 1a und 1b zeigen Ausführungsbeispiele eines Verfahrens zum zeitaufgelösten Berechnen einer Deformation eines Körpers. Das Verfahren umfasst ein Berechnen 110 eines Modells des Körpers während der Deformation, etwa basierend auf einer voraussichtlichen Krafteinwirkung auf den Körper während der Deformation. Der Körper kann beispielsweise in eine Vielzahl anderer Körper bzw. ein komplexes Modell eingebettet sein, beispielsweise das eines Gesamtfahrzeugs, das aus einer Vielzahl an Körpern besteht. Dabei kann das Modell des Körpers in einer (3D-) Finite-Elemente-Simulation berechnet 110 werden. Das Verfahren umfasst ferner ein Berechnen 120 eines vorhergesagten Röntgenbildes für den Körper für eine Mehrzahl von Zeitpunkten während der Deformation basierend auf dem Modell, etwa basierend auf einer vordefinierten Abbildungsgeometrie ("Betrachtungswinkel"). Dabei ist die Deformation beispielsweise ein Prozess, der die (etwa alle der) Mehrzahl von Zeitpunkten beinhaltet, also ein Prozess der Deformation des Körpers über die Mehrzahl von Zeitpunkten. Dabei kann die Deformation die Translation und Rotation des betrachteten Objekts (Körpers) umfassen. Bei einer Translation oder Rotation bleibt die relative Lage von Merkmalen (oder Feature-Punkten) innerhalb des Objekts bleibt gleich, die Positionen der Merkmale ändert sich aber in Bezug zu einem äußeren Koordinatensystem. In Ausführungsbeispielen umfasst die Deformation ferner eine Verformung (im klassischen Sinn), d.h. die relative Lage von (einigen) Merkmalen ändert sich relativ zueinander. Das Verfahren umfasst ferner ein Erhalten 130 je eines gemessenen Röntgenbildes des Körpers für die Zeitpunkte (der Mehrzahl von Zeitpunkten) während der Deformation. Dabei können für jeden Zeitpunkt der Mehrzahl von Zeitpunkten mehrere vorhergesagte Röntgenbilder und mehrere gemessene Röntgenbildern aus unterschiedlichen Perspektiven genutzt werden. Das Verfahren umfasst ferner ein Modifizieren 140 des Modells basierend auf den vorhergesagten Röntgenbildern und den gemessenen Röntgenbildern. Dabei kann das Verfahren, wie in Fig. 1b gezeigt, ferner ein Erstellen 170 der gemessenen Röntgenbilder durch Aufnahme eines Szintillators mit einer optischen Hochgeschwindigkeitskamera umfassen, etwa um die gemessenen Röntgenbilder zu erhalten. Die gemessenen Röntgenbilder können basierend auf einer Belichtung des Szintillators durch eine gepulste Strahlungsquelle aufgenommen werden.

Für die Auswertung der gewonnenen Daten wird aus den vorhandenen (3D-FE)-Simulationsdaten, dem Modell des Körpers während der Deformation, eine Röntgensimulation erstellt. Basierend auf der Röntgensimulation können die vorhergesagten Röntgenbilder berechnet werden. Die Röntgensimulation ist Bestandteil der integrierten Datenauswertung und Datenassimilation. Mittels Röntgensimulation (die genutzt werden kann, um die vorhergesagten Röntgenbilder zu berechnen) und der basierend auf Materialdaten abgebildeten Absorptionseigenschaften kann in jedem Zeitschritt die (theoretische) räumliche Lage relevanter Strukturen dargestellt sein. In anderen Worten kann das jeweilige vorhergesagte Röntgenbild basierend auf einer Lage der Komponenten des Körpers, basierend auf Absorptionseigenschaften der Komponenten des Körpers, und basierend auf einem vorhergesagten Betrachtungswinkel berechnet werden, etwa so dass für jeden Zeitpunkt der Mehrzahl von Zeitpunkte eine projizierte Lage der Komponenten oder von Merkmalen auf dem jeweiligen vorhergesagten Röntgenbild dargestellt ist. Dabei kann das jeweilige vorhergesagte Röntgenbild beispielsweise (ausschließlich) die projizierte Lage der Merkmale abbilden, etwa ohne die Schattierungen oder Konturen der Komponenten zu zeigen. Dabei kann ein vorhergesagtes Röntgenbild für einen Zeitpunkt (in) der Mehrzahl von Zeitpunkten in manchen Ausführungsbeispielen erst dann berechnet werden, wenn die Modifikation des Modells, die auf einem vorherigen Zeitpunkt der Mehrzahl von Zeitpunkte basiert, erfolgt ist, also basierend auf dem modifizierten Modell. Mithilfe angepasster Feature Detektion und Tracking (eine Identifizierung und Nachverfolgung von Merkmalen, z.B. anhand diskreter Punkte auf einem Bauteil)-Algorithmen kann auf Basis der Informationen des vorherigen Zeitschritts die Deformation relevanter Strukturen nachverfolgt werden. In anderen Worten kann das Modell basierend auf einem Unterschied zwischen vorhergesagten Positionen von Merkmalen auf den vorhergesagten Röntgenbildern und gemessenen Positionen von entsprechenden Merkmalen auf den gemessenen Röntgenbildern modifiziert 140 werden. Dabei können die Merkmale manuell und/oder automatisch in den vorhergesagten Röntgenbildern und den gemessenen Röntgenbildern identifiziert werden. Beispielsweise kann zumindest ein Teil der Merkmale durch Röntgen-Marker gebildet werden. Diese Röntgen-Marker können auf dem Körper angebracht werden und in das Modell integriert werden. Durch ihre vorbekannte Position am Körper kann die Identifikation dieser Merkmale automatisch (oder auch manuell) erfolgen. Zusätzlich oder alternativ kann zumindest ein Teil der Merkmale durch Konturen von Komponenten des Körpers gebildet werden. Dabei können die Konturen automatisch oder manuell in den vorhergesagten Röntgenbildern und den gemessenen Röntgenbildern identifiziert werden, etwa basierend auf den Materialeigenschaften der entsprechenden Komponenten. Die Zusammenführung der experimentellen und numerischen Simulationsdaten, folgend Datenassimilation, zielt folglich auf eine sukzessive Verbesserung eines in sich geschlossenen, zeitlich aufgelösten Modells mit prädiktiver Fähigkeit ab.

Auf der einen Seite existiert eine zeitaufgelöste, ggf. mit Fehlern behaftete (3D)-FE-Simulation eines Fahrzeugcrashs (das Modell des Körpers), auf der anderen Seite sind zeitaufgelöste, experimentelle Daten vorhanden (die gemessenen Röntgenbilder) die jedoch informationell unterbestimmt sind (2D-Röntgen oder Sensor-Daten). Der Abgleich von Experiment und Modell mittels Datenassimilation führt Korrektur-Informationen in das (informationell voll bestimmte) FE-Modell zurück und ermöglicht so die Digitalisierung des realen Crash-Experiments.

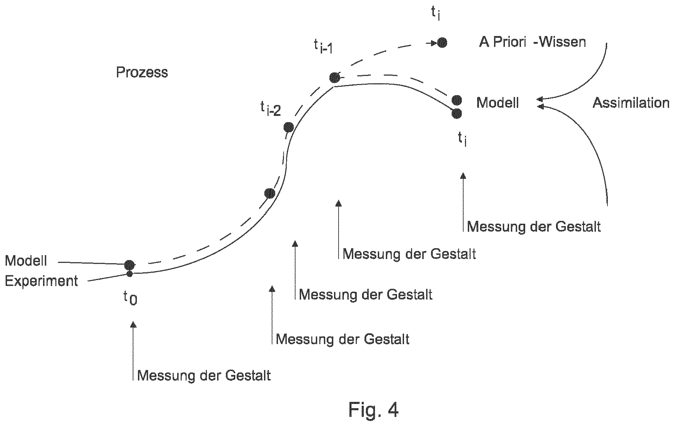

Dabei kann das Modell hier im Besonderen ein Finite Elemente-Modell sein. Das Modell enthält die "ganze Wahrheit" (Phasenraum) des Prozesses bzw. des Körpers und seiner zeitlichen Evolution. Es umfasst oder besteht aus der Geometrie des Körpers (Morphologie) und Physikalische Parameter, wie etwa Materialien und Materialeigenschaften, Randbedingungen (Geschwindigkeiten, Kräfte, ...), innere Eigenschaften (innere Energie, Spannungen, Dehnung, Schädigung, ...). Dabei stellt das Modell, zu jedem Zeitpunkt t der Mehrzahl von Zeitpunkten, eine nahezu korrekte Beschreibung des Experiments (also der Deformation) bis zum zuvor betrachteten Zeitpunkt t-1 dar. Dabei kann das Modell als Finite Elemente-Repräsentation der Deformation (also des Experiments) zum Zeitpunkt t gesehen werden. Zum Zeitpunkt t kann durch das Verfahren der Datenassimilation das Modell zur (nahezu) Deckung mit dem Experiment gebracht werden (auch hier ist der gesamte Phasenraum gemeint). Fig. 4 zeigt eine Illustration der Datenassimilation zur Modifizierung des Modells. Dort ist gezeigt, wie verschiedene Messungen der Gestalt des Körpers (durch gemessene Röntgenbilder) über die Mehrzahl von Zeitpunkten bis zu Zeitpunkt t durchgeführt werden, wobei das Modell bis Zeitpunkt t-1 jeweils so modifiziert wurde, dass es dem Experiment (also der realen Deformation des Körpers) gleicht. Daher umfasst das A-Priori-Wissen das modifizierte Modell bis zum Zeitpunkt t-1, sowie die Voraussage der Deformation bis Zeitpunkt t. Zum Zeitpunkt t divergiert die Messung der Gestalt von dem A-Priori-Wissen, also der Voraussage der Deformation. Durch Assimilation der Daten kann das Modell, ausgehend von der A-Priori-Information so modifiziert werden, dass das Modell anschließend der gemessenen Gestalt des Körpers gleicht.

Ein Ergebnis der Datenassimilation ist die quantitative und zeitaufgelöste dreidimensionale Rekonstruktion der Bewegung (Translation, d.h. Schwerpunktsbewegung und Rotation) sowie der Deformation von Objekten (im Folgenden "Komponente" genannt), ggf. eingebettet in ein Gesamtsystem bestehend aus mehreren Komponenten.

Diese dreidimensionale kinematische Rekonstruktion basiert auf Modellwissen (A-Priori-Information) und Messdaten (2D-Röntgenbilder). Die 2D-Röntgenbilder können dabei gemäß dem im Lösungsweg beschriebenen Quelle-Detektor-Aufbau gewonnen werden.

Als A-Priori Information kann dabei das Ergebnis einer numerischen Simulation (z.B. FEM-Simulation), welche das Verhalten der zu untersuchenden Komponente (sowie das Verhalten der umgebenden Komponenten bzw. des Gesamtsystems bestehend aus mehreren Komponenten) beschreibt, verwendet werden, etwa das Modell des Körpers während der Deformation. In anderen Worten entspricht das Modell des vorherigen Zeitpunkts (d.h. das Modell, das basierend auf der Röntgensimulation des vorherigen Zeitpunkts angepasst wurde) der A-Priori umfasst oder ist zumindest ein Teil davon. In anderen Worten umfasst die A-Priori Information beispielsweise das alte, ursprüngliche (FE-)Modell bzw. das korrigierte Modell bis zum Zeitpunkt t-1 und die Voraussage des Zustands zum Zeitpunkt t durch das vorliegende Modell zum Zeitpunkt t-1. Dabei bedeutet "während der Deformation" nicht, dass das Modell (nur) während der Deformation berechnet wird, sondern dass das Modell des Körpers die Deformation des Körpers über die Mehrzahl von Zeitpunkten abbildet. Dieses Ergebnis, welches für die Datenassimilation als A-Priori-Information verwendet wird, wird im Folgenden als "Zeitaufgelöstes 3D-Modell", oder kurz "Modell (des Körpers)", bezeichnet. Ist im Folgenden die numerische Simulation oder das der Simulation zugrundeliegende physikalische Modell der Komponenten und ihrer Materialien gemeint, so wird dies als "physikalisches Modell" bzw. die Gesamtheit als "numerische Simulation" bezeichnet. In Ausführungsbeispielen umfasst oder basiert die Berechnung des Modells des Körpers während der Deformation eine/auf einer numerischen Simulation. Die numerische Simulation basiert auf einem physikalischen Modell des Körpers, etwa auf physikalischen Modellen der Komponenten des Körpers.

Die 3D-Rekonstruktion der Kinematik bzw. Datenassimiliation umfasst dabei zumindest manche der folgenden Schritte:
1) Erzeugen von simulierten Röntgenprojektionen (d.h. der vorhergesagten Röntgenbilder) auf Basis des Modells und unter Verwendung der im Experiment vorliegenden Projektionsgeometrie für jeden Zeitpunkt, zu dem im Experiment ein Bild erzeugt und die zu rekonstruierende Komponente abgebildet wurde (d.h. für die Mehrzahl von Zeitpunkten). In anderen Worten, der Verfahren umfasst das Berechnen 120 eines vorhergesagten Röntgenbildes für den Körper für die Mehrzahl von Zeitpunkten während der Deformation basierend auf dem Modell (etwa basierend auf der Projektionsgeometrie, einem voraussichtlichen Betrachtungswinkel in der Aufnahme des entsprechenden Röntgenbildes).
2) Verwenden der simulierten Röntgenprojektionen, um die kinematisch zu rekonstruierende Komponente (gleichzeitig oder nacheinander) in möglichst allen korrespondierenden Zeitpunkten erzeugten, realen Röntgenbild zu lokalisieren, auf der sie abgebildet wurde, und/oder Verwenden der zu den korrespondierenden Zeitpunkten simulierten Röntgenprojektionen, um markante Punkte (Features) der zu rekonstruierenden Komponente in möglichst allen realen Röntgenbildern, auf denen sie abgebildet wurde, zu lokalisieren. Der (Röntgen-) Messung zugänglich ist dabei beispielsweise (nur) die Morphologie (bzw. ein Teil der Morphologie) zu den Messzeitpunkten tᵢ.
3) In anderen Worten kann das Verfahren ein Identifizieren und/oder Lokalisieren der Merkmale in den gemessenen Röntgenbildern basierend auf den Positionen der Merkmale in den vorhergesagten Röntgenbildern umfassen.
4) Quantitativer Vergleich der Lage von Konturen der Gesamtkomponente und/oder Lage der Features im simulierten Röntgenbild (2D-Verschiebungsvektor) und daraus Ableitung eines dreidimensionalen Verschiebungsvektors im Raum durch geometrische Rückprojektion für jede charakteristische Kontur bzw. Feature-Punkt (d.h. für jedes Merkmal) und für jeden Zeitpunkt, zu dem im Experiment ein Bild erfasst und die zu rekonstruierende Komponente abgebildet worden ist. In anderen Worten kann das Verfahren ein Berechnen 145 eines dreidimensionalen Verschiebungsvektors für die Merkmale durch geometrische Rückprojektion der Merkmale umfassen, etwa für jedes Merkmal über die Mehrzahl von Zeitpunkten. Die Modifikation des Modells kann auf dem dreidimensionalen Verschiebungsvektor basieren.
5) Reduzierung der in 3) quantifizierten Unterschiede und Quantifizierung des Restunterschiedes (Angabe eines Gütemaßes) für alle Zeitschritte und alle erfassten Features (im Modell). Dies entspricht dem Modifizieren 140 des Modells basierend auf den vorhergesagten Röntgenbildern und den gemessenen Röntgenbildern. In anderen Worten kann die Modifikation 140 des Modells darauf gerichtet sein, den Unterschied zwischen den vorhergesagten Positionen der Merkmale auf den vorhergesagten Röntgenbildern und den gemessenen Positionen der entsprechenden Merkmale auf den gemessenen Röntgenbildern über die Mehrzahl von Zeitpunkten zu reduzieren.

Dabei kann die Reduzierung der Unterschiede mittels verschiedener Mittel erreicht werden.

Beispielsweise kann die Reduzierung durch eine Veränderung von Schwerpunktsbewegung (Translation) und (Starrkörper-) Rotation um den Schwerpunkt der zu rekonstruierenden Komponente (des Körpers) erreicht werden. Als Modell der Komponente/des Körpers kann das zum korrespondierenden Zeitschritt (oder anderer, besser zum aktuellen Deformationsstatus passenden Zeitschritte, unabhängig davon, ob sie zeitlich davor oder danach liegen) der numerischen Simulation vorliegende (3D-)Modell (d.h. das Teil-Ergebnis der numerischen Simulation für die Komponente) verwendet werden. In anderen Worten kann das Verfahren ein Berechnen 150 einer durch die Deformation des Körpers verursachten Translation und/oder Rotation zumindest eines Teils des Körpers basierend auf dem Unterschied zwischen den vorausgesagten und den gemessenen Positionen der Merkmale umfassen. Die Modifikation des Modells kann auf der berechneten Translation und/oder der berechneten Rotation zumindest eines Teils des Körpers basieren. Beispielsweise kann eine in dem Modell angenommene Translation und/oder Rotation des Teils des Körpers basierend auf der durch die Deformation des Körpers verursachten Translation und/oder Rotation angepasst werden oder die durch die Deformation des Körpers verursachten Translation und/oder Rotation kann dem Modell hinzugefügt werden. Dabei kann das Berechnen 150 der durch die Deformation des Körpers verursachten Translation und/oder Rotation die Translation und/oder die Rotation so berechnen, dass ein Unterschied zwischen den vorhergesagten Positionen der Merkmale auf den vorhergesagten Röntgenbildern und den gemessenen Positionen der entsprechenden Merkmale auf den gemessenen Röntgenbildern reduziert wird (auf entsprechend neu berechneten vorausgesagten Röntgenbildern).

Zusätzlich kann das Objekt/der Körper mittels morphologischer Operatoren deformiert werden. Dabei kann ist ein Morphologischer Operator eine Rechen-Operation, die die Gestalt (Morphologie) der A Priori-Information (also des Modells) zum Zeitpunkt t in die Morphologie der Messung zum Zeitpunkt t überführt bzw. mit dieser in Einklang bringt. In anderen Worten ist der Morphologische Operator eine Rechenoperation zum Angleichen des Modells an die in dem jeweiligen gemessenen Röntgenbild abgebildete Realität, etwa durch Anpassen des Modells in einer Weise, so dass die vorhergesagten Positionen der Merkmale mit den gemessenen Positionen der entsprechenden Merkmale übereinstimmen. Im einfachsten Fall ist das die Anwendung von Verschiebungsvektoren (unphysikalisch). In zumindest einigen Ausführungsbeispielen ist (im komplexen Fall) das eine auf physikalischen Parametern basierende Vorschrift, wie im Folgenden dargestellt wird. Das Verfahren kann ferner ein Berechnen 160 von morphologischen Operatoren für die Deformation des Körpers basierend auf dem Unterschied zwischen den vorausgesagten und den gemessenen Positionen der Merkmale umfassen. Die Modifikation des Modells kann auf den berechneten morphologischen Operatoren für die Deformation des Körpers basieren. Beispielsweise können in dem Modell angenommene morphologische Operatoren basierend auf den berechneten morphologischen Operatoren angepasst werden oder die berechneten morphologischen Operatoren können dem Modell hinzugefügt werden. Dabei kann das Berechnen 160 der morphologischen Operatoren die morphologischen Operatoren so berechnen, dass ein Unterschied zwischen den vorhergesagten Positionen der Merkmale auf den vorhergesagten Röntgenbildern und den gemessenen Positionen der entsprechenden Merkmale auf den gemessenen Röntgenbildern reduziert wird (auf entsprechend neu berechneten vorausgesagten Röntgenbildern).

Die morphologischen Operatoren können auf einer Verschiebung von markanten Punkten des Körpers im Modell basieren, wobei die markanten Punkte den Merkmalen in den vorhergesagten und gemessenen Röntgenbildern entsprechen. In manchen Ausführungsbeispielen können die morphologischen Operatoren dadurch berechnet werden, dass die markanten Punkte im Modell basierend auf dem Unterschied zwischen den vorausgesagten und den gemessenen Positionen der Merkmale verschoben werden und benachbarte Komponenten/Elemente des Körpers proportional und/oder basierend auf einer mathematischen Funktion an die verschobenen markanten Punkte angepasst werden. Alternativ können die morphologischen Operatoren dadurch berechnet werden, dass basierend auf dem Unterschied zwischen den vorausgesagten und den gemessenen Positionen der Merkmale (un)physikalische Zwangskräfte in das Modell eingefügt werden und das Körper basierend auf den (un)physikalischen Zwangskräften so verändert wird, dass ein Unterschied zwischen den vorausgesagten und den gemessenen Positionen der Merkmale reduziert wird. In einer dritten Variante können die morphologischen Operatoren dadurch berechnet werden, dass die markanten Punkte im Modell basierend auf dem Unterschied zwischen den vorausgesagten und den gemessenen Positionen der Merkmale verschoben werden, wobei sich die Verschiebungen aus Linearkombinationen von Verschiebungen ergeben, die für vorhergehende und/oder nachfolgende Zeitpunkte der Mehrzahl von Zeitpunkten berechnet wurden. Dabei wird angenommen, dass das Modell i.A. korrekt ist, und lediglich ein Zeitpunkt/Phase oder eine Amplitude der Verschiebungen angepasst wird.

Wie bereits ausgeführt können die morphologischen Operatoren zur Deformation eingeschränkt werden, indem ausschließlich Deformationen zugelassen werden, die sich durch aus Linearkombination der Deformation der (bezüglich Rotation und Translation normierten) 3D-Modelle relativ zwischen anderen Zeitpunkten der numerischen Simulation ergeben. In anderen Worten können (lediglich/ausschließlich) morphologische Operatoren zugelassen werden, die sich aus einer Linearkombination von Deformationen ergeben die für vorhergehende oder nachfolgende (zukünftige) Zeitpunkte der Mehrzahl von Zeitpunkten (in der numerischen Simulation) berechnet wurden (etwa in der Modifikation des Modells für ein oder mehrere vorhergehende Zeitpunkte). Beispielsweise können (alle) Informationen über die von der FE-Simulation vorhergesagte Deformation des Körpers zu jedem Zeitpunkt der Simulation (auch zu späteren Zeitpunkten als dem gerade betrachteten) vorliegen. Aus diesem Grund ist es für diesen Ansatz, die Deformationen zu erklären bzw. auf das betrachtete Teil anzuwenden, möglich, auch die zu späteren Zeitpunkten vorhergesagte Deformation zu betrachten. Dies kann etwa in Fällen genutzt werden, in denen die Simulation prinzipiell die richtige Deformation einer Komponente des Körpers anzeigt, aber eben zu einem späteren Zeitpunkt, als sie in der Realität auftritt. Dann kann die Deformation im aktuellen Zeitschritt durch ein "Vorziehen" der Deformation eines späteren Zeitschritts erklärt bzw. abgebildet werden.

In zumindest manchen Ausführungsbeispielen können dabei unterschiedliche Linearkombinationen (d.h. unterschiedliche Gewichtung der relativen Deformation für gleiche Zeitpunkte) für unterschiedliche Features auch für die gleiche Komponente zugelassen werden. Es können unterschiedliche Linearkombinationen für unterschiedliche Merkmale zugelassen werden. Dabei kann der Körper ein oder mehrere Komponenten umfassen, und jede Komponente kann (wiederum) ein oder mehrere der Merkmale umfassen. Für jedes der Merkmale (auch der gleichen Komponente) können unterschiedliche Linearkombinationen zugelassen werden.

In zumindest manchen Ausführungsbeispiele kann dabei die Deformation der Komponente durch eine numerische Simulation, die sowohl physikalische A-Priori-Information (z.B. Materialmodelle des Körpers, Kräfte, die auf den Körper wirken und Geschwindigkeiten (etwa in einem Crash-Szenario) des vorhergehenden Zeitschritts) berücksichtigt als auch das Ergebnis der vorhergehenden Berechnungen (morphologische Operatoren, Translation, Rotation, also 3D-Verschiebungsvektoren) als Randbedingungen für z.B. eine quasistatische oder dynamische Verformung (z.B. durch unphysikalische Zwangskräfte) berechnet werden. Das Berechnen des Modells kann beispielsweise die numerische Simulation umfassen oder auf der numerischen Simulation basieren. Das a-priori-Wissen über die Deformation und die berechneten morphologischen Operatoren (und die Translation/Rotation der Komponenten des Köpers) können genutzt werden, um Zwangskräfte zu berechnen, die auf den Körper einwirken. Die numerische Simulation kann auf den Zwangskräften basieren. Dabei können die morphologischen Operatoren und die Translation und/oder Rotation der Komponenten des Körpers unter dem Begriff 3D-Verschiebungsvektoren zusammengefasst werden. In anderen Worten kann die Deformation des Körpers durch eine numerische Simulation basierend auf a-priori-Wissen über die Deformation und basierend auf den berechneten morphologischen Operatoren berechnet werden (in der Berechnung des Modells des Körpers). Alternativ kann die Deformation der Komponente nicht durch unphysikalische Deformationsvektoren, Zwangskräfte oder andere Randbedingungen, sondern durch Veränderung der Eingangsparameter (z.B. aber nicht ausschließlich Kräfte, Geschwindigkeiten und Materialparameter) der numerischen Simulation im vorhergehenden Zeitschritt und Durchführen des Zeitschrittes oder mehrerer Zeitschritte (über die Mehrzahl von Zeitpunkte) der numerischen Simulation modifiziert werden. In anderen Worten kann das a-priori-Wissen und die berechneten morphologischen Operatoren genutzt werden, um Eingangsparameter der numerischen Simulation in Bezug auf Eigenschaften eines Materials des Körpers, in Bezug auf einwirkende Kräfte, in Bezug auf eine (Eingangs-)Geometrie des Körpers, und/oder in Bezug auf Geschwindigkeiten anzupassen.

Die Reduzierung der Unterschiede kann so durchgeführt werden, dass die Abweichung zwischen der projizierten Lage und Form der Komponente (bzw. der Merkmale, durch die die Komponente definiert ist) in den im Experiment gewonnenen Röntgenbildern und den auf Basis des durch die oben genannten Mittel modifizierten Modells reduziert wird.
6) In zumindest manchen Ausführungsbeispielen können die Schritte 1 bis 4 (für jedes vorhegesagte/gemessene Röntgenbild) wiederholt werden, wobei als Modell das im letzten Schritt veränderte Modell, bzw. das Ergebnis der im letzten Schritt veränderten FEM-Simulation verwendet werden. In anderen Worten kann bei dem Berechnen 120 des vorhergesagten Röntgenbildes eine Modifikation des Modells, die auf einem vorherigen Röntgenbild oder auf einer vorhergehenden Iteration der Schritte basiert, einbezogen werden. Das Modell kann beispielsweise für einen nachfolgenden Zeitpunkt der Mehrzahl von Zeitpunkten erst berechnet 110 werden, wenn die Modifikation des Modells, die auf einem Röntgenbild es vorherigen Zeitpunkt basiert, durchgeführt ist.
Dies ermöglicht die Einbeziehung der vorher berechneten Modifikationen des Modells.
7) Das Verfahren kann abgebrochen/beendet werden, wenn in Schritt 4 keine weitere Verbesserung mehr erzielt werden kann, d.h. das iterative Verfahren die Lösungen mit der reduzierten (etwa minimalen) Abweichung erreicht hat.

Das Ergebnis umfasst je nach Ausführungsbeispiel eine zeitaufgelöste 3D-Reprasentation (Modell) des durchgeführten Experiments (etwa das Modell des Körpers während der Deformation, über die Mehrzahl von Zeitpunkten), wobei die Lage und Ausrichtung einer oder mehrerer Komponenten im Raum zu jedem Zeitpunkt, zu dem im Experiment ein Bild erzeugt und die Komponente abgebildet wurde, im Modell so korrigiert wurde, dass sie mit der Lage und Ausrichtung im Experiment unter Berücksichtigung der Fehler von Experiment und Simulation übereinstimmt. Dabei kann/können, je nach Ausführungsbeispiel, ein oder mehrere Komponenten des Körpers deformiert sein, etwa, falls die morphologischen Operatoren berechnet wurden.

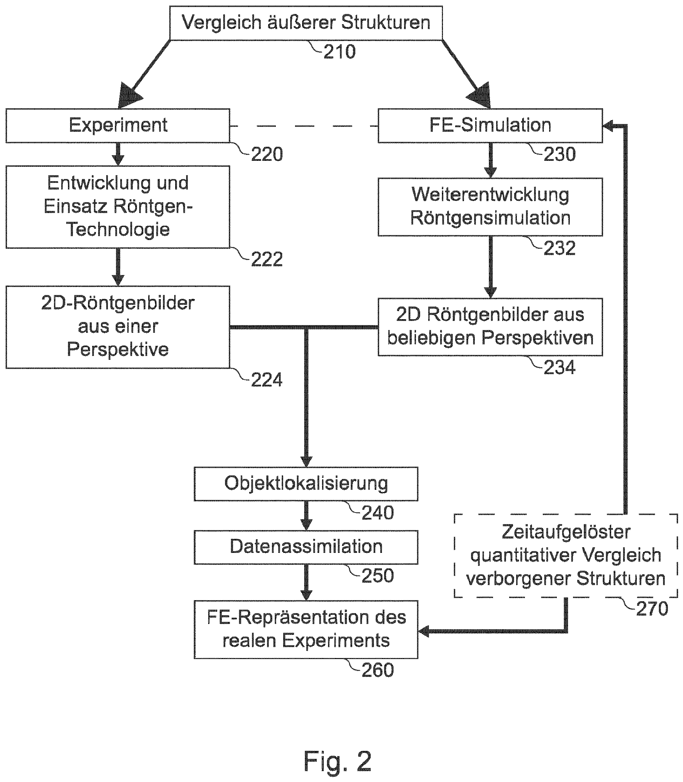

Fig. 2 zeigt eine Übersicht eines Mess- und Auswerteverfahrens nach einem Ausführungsbeispiel. In Fig. 2 wird ein Vergleich äußerer Strukturen 210 basierend auf einem Experiment 220 und einer FE-Simulation 230 durchgeführt. Um das Experiment aufzunehmen wird Röntgentechnologie entwickelt und eingesetzt 222, um 2D-Röntgenbilder aus einer Perspektive zu Messen und zu erhalten 224. Aus der FE-Simulation 230 wird eine Röntgensimulation 232 abgeleitet, mittels derer vorhergesagte Röntgenbilder 234 über eine Mehrzahl von Zeitpunkten berechnet werden. Basierend auf den gemessenen und den vorhergesagten Röntgenbildern wird eine Objektlokalisierung 240 durchgeführt, um Merkmale eines zu untersuchenden Körpers zu identifizieren, und es findet eine Datenassimilation 250 statt (etwa durch Modifizieren des Modells basierend auf den gemessenen und den vorhergesagten Röntgenbildern). Basierend auf der Datenassimilation wird eine FE-Repräsentation (etwa das Modell des Körpers während der Deformation) des realen Experiments erzeugt 260. In anderen Worten implementiert das Mess- und Auswerteverfahren einen zeitaufgelösten quantitativen Vergleich verborgener Strukturen, der einfließt in die FE-Repräsentation des realen Experiments 260 und in die FE-Simulation 230.

Neben Untersuchungen periodischer Prozesse bietet das entwickelte Messsystem der in-situ-Hochgeschwindigkeits-Röntgen-Diagnostik erstmals die Möglichkeit transiente, dynamische Prozesse verborgener Strukturen kontinuierlich aufzuzeichnen und auszuwerten. In Bezug auf den Automobilcrash liefert die Sichtbarmachung hochdynamischer Verformungsprozesse während eines Crashtests Hinweise und Antworten auf grundlegende Fragestellungen im Entwicklungsprozess, wie sie bisher nicht verfügbar waren, da erstmalig die Beobachtung von im Fahrzeuginneren verbauten Komponenten während des Crashs im realen Testszenario möglich ist.

Die bisher nicht erzielbare in-situ-Röntgen-Diagnostik wurde durch Integration von 2D-bildgebenden Röntgenexperimenten mit 3D-Strukturdaten aus der numerischen Simulation möglich. Auf Basis der Bildfrequenz von bis zu 1000 Bildern pro Sekunde können außerdem Röntgenvideos von dynamischen Prozessen erstellt werden. Darüber hinaus erschließt das neu entwickelte Analyseverfahren Möglichkeiten in der Integration von experimentellen und computerbasierten Analysen. Experimentelle Ergebnisse können zum unmittelbaren Abgleich mit numerischen Prognosen genutzt werden und dazu beitragen, die Prognosequalität der Simulationsrechnungen entscheidend zu verbessern.

Ausführungsbeispiele können etwa genutzt werden, um Türschließmechanismen beim Seitenaufprall während des Crashs sichtbar zu machen. Wie in vielen anderen denkbaren Anwendungen liegt in diesem Fall die Motivation zur Nutzung von Röntgen im Crash zur Sichtbarmachung ansonsten nicht beobachtbarer Strukturdeformationen. Um die Insassen bei einem Unfall sicher im Fahrzeug zu halten ist es zwingend notwendig, dass eine Türöffnung beim Crash vermieden wird. Sollte sich in einem Entwicklungsstadium zeigen, dass sich bei einem Seitenaufprall eine Türöffnung ergibt, ist es gängige Vorgehensweise, aufwändig Messtechnik an vielen Stellen im Inneren des Schlosses zu applizieren. Durch eine Untersuchung der Mechanismen mit Röntgentechnik kann durch nur eine zusätzliche Analyse ein großer im innen liegender Bereich betrachtet werden, um so Ursachen im Detail und vollumfassend zu erfassen. Bei der anschiebenden Entwicklungsarbeit kann dann sofort an der richtigen Stelle angesetzt werden. Dies kann genutzt werden, um die derzeitig anstehenden großen Änderungen von Fahrzeugkonzepten von Elektromobilität hin zu autonomen Fahren zu unterstützen. Analyseverfahren wie die Röntgentechnologie können hier als Schrittmacher für innovative Konzepte mit hoher Crashsicherheit gesehen werden.

Möglich sind hier für das Messverfahren unterschiedliche abweichende Kombinationen aus Strahlenquelle/Detektoraufbau oder Eigenschaften. Hinsichtlich des Auswerteverfahrens sind andere Prozessschritte denkbar, um aus dem Abgleich von Experiment und Modell mittels Datenassimilation, Korrektur-Informationen in das virtuelle (FE-)Modell zurückzuführen.

Ausführungsbeispiele schaffen eine dynamische Deformationsanalyse (verborgener) Strukturen mittels Röntgen. Ausführungsbeispiele schaffen ferner einen Abgleich experimenteller Daten mit einem zeitaufgelösten (virtuellen) 3D-Modell. Ausführungsbeispiele schaffen ferner eine Rückführung von Korrektur-Informationen mithilfe des beschriebenen Prozesses.

Der Einsatz dynamischer Röntgendiagnostik im automobilen Crashtest ist nur als eine beispielhafte Anwendung zu sehen. Ausführungsbeispiele können beispielsweise genutzt werden, um ausgewählte Fragestellungen in einzelnen Crashversuchen zu adressieren. Dabei kann die Durchführung und Instrumentierung eines Crashversuchs vorab mittels Röntgensimulation verbessert und im Bedarfsfall auch mit dynamischer Röntgentechnik ausgestattet werden. Dabei kann Röntgen beispielsweise als Standard-Werkzeug an relevanten Stellen des Entwicklungsprozesses, von einer frühen Konzeptstudie bis hin zur Freigabe oder Zertifizierung flexibel und effizient im Versuchsbetrieb einzusetzen. Um hierbei kürzere Entwicklungszeiten bei gesteigerter Komplexität zu erreichen, ist die direkte Anbindung der neuen Diagnostik an die digitale Entwicklungsumgebung möglich. Neben weiteren naheliegenden Anwendungen in der dynamischen Deformationsanalyse außerhalb der Automobilindustrie, z. B. für die Luftfahrt oder Verpackungsindustrie, lassen sich auch periodische Prozesse untersuchen und weit besser verstehen, etwa im Rahmen von Lebensdauerbetrachtungen. Da sowohl das Gesamtsystem als auch einzelne Systemkomponenten von der Quelle über den Detektor bis zur Auswertemethodik weit über andere Ansätze hinausgehen, bieten sich weitere Anwendungen der Technologie sowie vielfaltige neue Möglichkeiten in der Analyse von Körpern, etwa von Deformationen von Körpern:
- in-situ-Implantat-Kontrolle

Zumindest manche Ausführungsbeispiele können bei einem Einsatz dynamischen Röntgens bei der Beobachtung von Implantat-Komponenten während des Kauprozesses genutzt zu werden. Mikro-Deformationen in den Verbindungsstellen der Implantat-Komponenten können zur unerwünschten Eindringung von Keimen oder zum Versagen der Implantat-Struktur fuhren. Die dynamische Röntgen-Diagnostik macht diese Deformationen und die kritischen Strukturbereiche sichtbar und ermöglicht damit alternative und zuverlässigere Implantat-Designs.

### • Anwendung in der Frachtkontrolle

In der Sicherheitstechnik werden zur Gepäck- oder Frachtkontrolle an Flughafen, Hafen oder an Grenzen häufig abbildende Röntgentechniken verwendet, um unerlaubte Güter, Waffen oder Drogen aufzuspüren. Zeilendetektor-basierte Geräte bieten derzeit aufgrund langer Scan- und Auswertezeiten nicht den geforderten Durchsatz. Dies gilt insbesondere für Luft- und Seefracht. Zur effizienten Luftfrachtkontrolle mittels CT (Computertomographie) erscheinen großflächige, schnelle Hochenergie-Flächendetektoren, wie sie im dynamischen Röntgendiagnostiksystem entwickelt werden, als besonders gut geeignet. Somit ermöglichen die in diesem Projekt entwickelten Technologien die Perspektive, in der Luftfrachtkontrolle CT in Zukunft als Standard zu etablieren.

### • Erweiterung der Diagnostik für Materialforschung

Zwei Trends der Materialforschung sind die skalenübergreifende Untersuchung der Werkstoffe von der atomistischen bis zur makroskopischen Ebene sowie die Integration von Experiment und numerischer Simulation. Beides dient dem besseren Verständnis des beobachteten Materialverhaltens und beide Bereiche profitieren unmittelbar vom Einsatz dynamischer Röntgendiagnostik. Die in Auswerteverfahren entwickelten Algorithmen der digitalen Deformationsanalyse eröffnen die Möglichkeit, komplexe Multimaterial-Proben mit deutlich höherer Informationsausbeute als mit bisher verfügbaren Methoden zu analysieren. Sie können sowohl im dynamischen wie auch im quasi-statischen Fall nutzbar gemacht werden. Damit wird eine detaillierte Charakterisierung des Werkstoffverhaltens über mehrere Längen- und Zeit-Skalen hinweg möglich. Für Konstrukteure wie auch für Simulationsexperten ist diese Entwicklung von größter Bedeutung.

### • Einsatz in der Förder- und Verfahrenstechnik

Die bildgebende Analyse von dynamischen Prozessen bietet vielversprechende Anwendungsmöglichkeiten in der Verfahrenstechnik. So können beispielsweise im Lebensmittelbereich Stoffe teils unterschiedlicher Phasen (Flüssig-Flüssig, Fest-Flüssig, Fest-Fest) gemeinsam verarbeitet werden. Das genaue Verständnis der zugrundeliegenden Durchmischungs-Prozesse kann insbesondere für die Qualität und Haltbarkeit von Lebensmitteln einen entscheidenden Mehrwert liefern. Darüber hinaus lassen sich damit aktuelle Fragestellungen hinsichtlich der Transportmechanismen von granularen Stoffen adressieren.

Mehr Details und Aspekte des Verfahrens werden in Verbindung mit dem Konzept oder Beispielen genannt, die vorher (z.B. Fig. 1a und 1b) beschrieben wurden. Das Verfahren kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

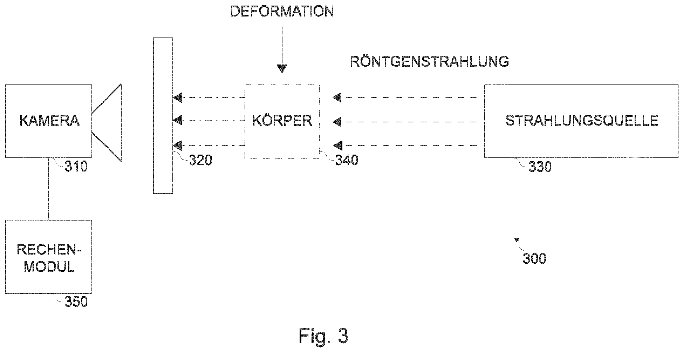

Fig. 3 zeigt ein Ausführungsbeispiel eines Aufbaus eines Systems 300 zum Erstellen einer Mehrzahl von gemessenen Röntgenaufnahmen. In manchen Ausführungsbeispielen kann das System ferner geeignet sein zum zeitaufgelösten Berechnen einer Deformation eines Körpers. Das System umfasst zumindest eine optische Hochgeschwindigkeitskamera 310, einen Szintillator 320 und eine Strahlungsquelle 330. Die Strahlungsquelle kann beispielsweise ausgebildet sein, um eine Szintillatorfläche des Szintillators mit gepulster Röntgenstrahlung zu belichten. Alternativ kann die Strahlungsquelle eine Strahlungsquelle sein, die konstant Strahlung in Richtung des Szintillators abgibt. Dabei kann ein Körper 340, etwa der Körper, der im Zusammenhang mit den Fign. 1a bis 2 eingeführt wird, zwischen der Strahlungsquelle 330 und dem Szintillator 320 angeordnet werden. Der Szintillator 320 ist ausgebildet, um die von der Strahlungsquelle emittierte Strahlung in Form von Licht abzugeben. Dabei kann die Szintillatorfläche ausgebildet sein, um Strahlung der Strahlungsquelle in sichtbares Licht umzuwandeln, welches indirekt von der Hochgeschwindigkeitskamera abgebildet und aufgezeichnet werden kann (also sog. digital indirekt konvertierender Detektor). Die optische Hochgeschwindigkeitskamera 330 ist ausgebildet, um das von dem Szintillator 320 abgegebene/umgewandelte Licht aufzunehmen. Eine abbildende Optik der Hochgeschwindigkeitskamera kann so gewählt sein, dass die Strahlenbelastung der Hochgeschwindigkeitskamera reduziert wird. Beispielsweise kann das System ausgebildet sein zum Erstellen 170 der gemessenen Röntgenbilder. Dabei kann die gepulste Strahlungsquelle ein (gepulster) Linearbeschleuniger sein. So kann die Strahlungsquelle 330 beispielsweise ausgebildet sein, um Röntgenstrahlung mit einer geeignet kurzen Pulslänge, um Bewegungsunschärfe zu vermeiden zu emittieren. Alternativ kann, wie bereits oben ausgeführt, eine konstante Strahlungsquelle genutzt werden, und eine Belichtungszeit der Hochgeschwindigkeitskamera kann angepasst sein, um eine Bewegungsunschärfe zu vermeiden. Die Bewegungsunschärfe im Röntgenbild ist eine Funktion der Auflösung des Röntgenbilds, des Abbildungsmaßstabs und der Geschwindigkeit des Objekts über die Belichtungszeit. Im Allgemeinen kann die Belichtungszeit durch Nutzen einer gepulsten Strahlungsquelle über die Länge der emittierten Pulse und/oder durch eine Belichtungszeit (die mit der Framerate der Kamera zusammenhängt) der optischen Hochgeschwindigkeitskamera angepasst werden (etwa im Falle einer konstanten Strahlungsquelle). Dabei ist die Aufnahme der Röntgenbilder eine Funktion aus der Pulsbreite der Röntgenpulse (im Falle einer gepulsten Strahlungsquelle), der Framerate/Belichtungszeit der Hochgeschwindigkeitskamera, und der Energie der Röntgenquelle. Die Röntgenstrahlung kann ausreichend hoch gewählt werden, um die abzubildenden Bauteile (bei der gewählten Belichtungszeit) immer noch durchdringen zu können.

Die optische Hochgeschwindigkeitskamera kann ausgebildet sein, um Licht im sichtbaren Wellenlängenbereich aufzunehmen. Beispielsweise kann die optische Hochgeschwindigkeitskamera ausgebildet sein, um eine Bildwiederholrate von zumindest 100 (Röntgen-)Bildern/s (oder zumindest 200 Bildern/s, zumindest 500 Bildern/s, zumindest 800 Bildern/s) aufzunehmen. Die Szintillatorfläche ist hinsichtlich ihrer (Strahlungs-)Absorptionseigenschaften, Abklingzeit, Materialdicke und -eigenschaften, auf die hohen Energien und kurzen Belichtungszeiten der gepulsten Röntgenstrahlung angepasst.

Um größere Objekte (beispielsweise Strukturkomponenten eines Fahrzeugs) dynamisch abzubilden, kann mittels einem modularen Aufbau, etwa bestehend aus dreiseitig kaskadierenden Einzelmodulen, die aktive Detektorfläche vergrößert werden. Beispielsweise kann der Szintillator eine Mehrzahl von Szintillatormodulen umfassen, und das System kann eine Mehrzahl von Hochgeschwindigkeitskameras zur Aufnahme des abgegebenen/umgewandelten Lichts der Mehrzahl von Szintillatormodule umfassen. Dabei kann die Mehrzahl von Szintillatormodulen beispielsweise in einer Matrixkonfiguration angeordnet sein, etwa in einer 1xn, 2xn- oder mxn-Matrixkonfiguration. Beispielsweise kann jedes Szintillatormodul benachbart sein zu bis zu drei weiteren Szintillatormodulen (und daher dreifach kaskadierend sein), bis zu vier weiteren Szintillatormodule (vierfach kaskadierend, etwa in einer mxn-Matrix) oder bis zu sechs weitere Szintillatormodule (in einer hexagon-basierten Wabenanordnung).

In manchen Ausführungsbeispielen umfasst das System 300 ferner ein Rechenmodul 350, ausgebildet zum Ausführen des Verfahrens der Fign. 1a und/oder 1b.

Mehr Details und Aspekte des Systems werden in Verbindung mit dem Konzept oder Beispielen genannt, die vorher (z.B. Fig. 1a bis 2) beschrieben wurden. Das System kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Die Aspekte und Merkmale, die zusammen mit einem oder mehreren der vorher detaillierten Beispiele und Figuren beschrieben sind, können auch mit einem oder mehreren der anderen Beispiele kombiniert werden, um ein gleiches Merkmal des anderen Beispiels zu ersetzen oder um das Merkmal in das andere Beispiel zusätzlich einzuführen.

Beispiele können weiterhin ein Computerprogramm mit einem Programmcode zum Ausführen eines oder mehrerer der obigen Verfahren sein oder sich darauf beziehen, wenn das Computerprogramm auf einem Computer oder Prozessor ausgeführt wird. Schritte, Operationen oder Prozesse von verschiedenen, oben beschriebenen Verfahren können durch programmierte Computer oder Prozessoren ausgeführt werden. Beispiele können auch Programmspeichervorrichtungen, z. B. Digitaldatenspeichermedien, abdecken, die maschinen-, prozessor- oder computerlesbar sind und maschinenausführbare, prozessorausführbare oder computerausführbare Programme von Anweisungen codieren. Die Anweisungen führen einige oder alle der Schritte der oben beschriebenen Verfahren aus oder verursachen deren Ausführung. Die Programmspeichervorrichtungen können z. B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren oder Steuereinheiten, die zum Ausführen der Schritte der oben beschriebenen Verfahren programmiert sind, oder (feld-)programmierbare Logik-Arrays ((F)PLAs = (Field) Programmable Logic Arrays) oder (feld-)programmierbare Gate-Arrays ((F)PGA = (Field) Programmable Gate Arrays), die zum Ausführen der Schritte der oben beschriebenen Verfahren programmiert sind, abdecken.

Durch die Beschreibung und Zeichnungen werden nur die Grundsätze der Offenbarung dargestellt. Weiterhin sollen alle hier aufgeführten Beispiele grundsätzlich ausdrücklich nur illustrativen Zwecken dienen, um den Leser beim Verständnis der Grundsätze der Offenbarung und der durch den (die) Erfinder beigetragenen Konzepte zur Weiterentwicklung der Technik zu unterstützen. Alle hiesigen Aussagen über Grundsätze, Aspekte und Beispiele der Offenbarung sowie konkrete Beispiele derselben umfassen deren Entsprechungen.

Ein als "Mittel zum..." Ausführen einer bestimmten Funktion bezeichneter Funktionsblock kann sich auf eine Schaltung beziehen, die ausgebildet ist zum Ausführen einer bestimmten Funktion. Somit kann ein "Mittel für etwas" als ein "Mittel ausgebildet für oder geeignet für etwas" implementiert sein, z. B. ein Bauelement oder eine Schaltung ausgebildet für oder geeignet für die jeweilige Aufgabe.

Funktionen verschiedener in den Figuren gezeigter Elemente einschließlich jeder als "Mittel", "Mittel zum Bereitstellen eines Signals", "Mittel zum Erzeugen eines Signals", etc. bezeichneter Funktionsblöcke kann in Form dedizierter Hardware, z. B "eines Signalanbieters", "einer Signalverarbeitungseinheit", "eines Prozessors", "einer Steuerung" etc. sowie als Hardware fähig zum Ausführen von Software in Verbindung mit zugehöriger Software implementiert sein. Bei Bereitstellung durch einen Prozessor können die Funktionen durch einen einzelnen dedizierten Prozessor, durch einen einzelnen gemeinschaftlich verwendeten Prozessor oder durch eine Mehrzahl von individuellen Prozessoren bereitgestellt sein, von denen einige oder von denen alle gemeinschaftlich verwendet werden können. Allerdings ist der Begriff "Prozessor" oder "Steuerung" bei Weitem nicht auf ausschließlich zur Ausführung von Software fähige Hardware begrenzt, sondern kann Digitalsignalprozessor-Hardware (DSP-Hardware; DSP = Digital Signal Processor), Netzprozessor, anwendungsspezifische integrierte Schaltung (ASIC = Application Specific Integrated Circuit), feldprogrammierbare Logikanordnung (FPGA = Field Programmable Gate Array), Nurlesespeicher (ROM = Read Only Memory) zum Speichern von Software, Direktzugriffsspeicher (RAM = Random Access Memory) und nichtflüchtige Speichervorrichtung (storage) umfassen. Sonstige Hardware, herkömmliche und/oder kundenspezifische, kann auch eingeschlossen sein.

Ein Blockdiagramm kann zum Beispiel ein grobes Schaltdiagramm darstellen, das die Grundsätze der Offenbarung implementiert. Auf ähnliche Weise können ein Flussdiagramm, ein Ablaufdiagramm, ein Zustandsübergangsdiagramm, ein Pseudocode und dergleichen verschiedene Prozesse, Operationen oder Schritte repräsentieren, die zum Beispiel im Wesentlichen in computerlesbarem Medium dargestellt und so durch einen Computer oder Prozessor ausgeführt werden, ungeachtet dessen, ob ein solcher Computer oder Prozessor explizit gezeigt ist. In der Beschreibung oder in den Patentansprüchen offenbarte Verfahren können durch ein Bauelement implementiert werden, das ein Mittel zum Ausführen eines jeden der jeweiligen Schritte dieser Verfahren aufweist.

Es versteht sich, dass die Offenbarung mehrerer, in der Beschreibung oder den Ansprüchen offenbarter Schritte, Prozesse, Operationen oder Funktionen nicht als in der bestimmten Reihenfolge befindlich ausgelegt werden soll, sofern dies nicht explizit oder implizit anderweitig, z. B. aus technischen Gründen, angegeben ist. Daher werden diese durch die Offenbarung von mehreren Schritten oder Funktionen nicht auf eine bestimmte Reihenfolge begrenzt, es sei denn, dass diese Schritte oder Funktionen aus technischen Gründen nicht austauschbar sind. Ferner kann bei einigen Beispielen ein einzelner Schritt, Funktion, Prozess oder Operation mehrere Teilschritte, -funktionen, -prozesse oder -operationen einschließen und/oder in dieselben aufgebrochen werden. Solche Teilschritte können eingeschlossen sein und Teil der Offenbarung dieses Einzelschritts sein, sofern sie nicht explizit ausgeschlossen sind.

Weiterhin sind die folgenden Ansprüche hiermit in die detaillierte Beschreibung aufgenommen, wo jeder Anspruch als getrenntes Beispiel für sich stehen kann. Während jeder Anspruch als getrenntes Beispiel für sich stehen kann, ist zu beachten, dass - obwohl ein abhängiger Anspruch sich in den Ansprüchen auf eine bestimmte Kombination mit einem oder mehreren anderen Ansprüchen beziehen kann - andere Beispiele auch eine Kombination des abhängigen Anspruchs mit dem Gegenstand jedes anderen abhängigen oder unabhängigen Anspruchs umfassen können. Solche Kombinationen werden hier explizit vorgeschlagen, sofern nicht angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt abhängig von dem unabhängigen Anspruch gemacht ist.

## Patentansprüche

1. Verfahren zum zeitaufgelösten Berechnen einer Deformation eines Körpers, das Verfahren umfassend:
Berechnen (110) eines Modells des Körpers während der Deformation, wobei das Modell des Körpers während der Deformation basierend auf einer voraussichtlichen Krafteinwirkung auf den Körper während der Deformation berechnet (110) wird, wobei die Deformation des Körpers durch eine numerische Simulation basierend auf a-priori-Wissen über die Deformation und basierend auf berechneten morphologischen Operatoren berechnet wird;
Berechnen (120) eines vorhergesagten Röntgenbildes für den Körper für eine Mehrzahl von Zeitpunkten während der Deformation basierend auf dem Modell;
Erhalten (130) je eines gemessenen Röntgenbildes des Körpers für die Zeitpunkte während der Deformation;
Modifizieren (140) des Modells basierend auf den vorhergesagten Röntgenbildern und den gemessenen Röntgenbildern,
wobei das Modell basierend auf einem Unterschied zwischen vorhergesagten Positionen von Merkmalen auf den vorhergesagten Röntgenbildern und gemessenen Positionen von entsprechenden Merkmalen auf den gemessenen Röntgenbildern modifiziert (140) wird, wobei die Modifikation (140) des Modells darauf gerichtet ist, den Unterschied zwischen den vorhergesagten Positionen der Merkmale auf den vorhergesagten Röntgenbildern und den gemessenen Positionen der entsprechenden Merkmale auf den gemessenen Röntgenbildern über die Mehrzahl von Zeitpunkten zu reduzieren; und
Berechnen (160) der morphologischen Operatoren für die Deformation des Körpers basierend auf dem Unterschied zwischen den vorausgesagten und den gemessenen Positionen der Merkmale, wobei die Modifikation des Modells auf den berechneten morphologischen Operatoren für die Deformation des Körpers basiert,
wobei das a-priori-Wissen und die berechneten morphologischen Operatoren genutzt werden, um Eingangsparameter der numerischen Simulation in Bezug auf Eigenschaften eines Materials des Körpers, in Bezug auf einwirkende Kräfte, in Bezug auf eine Geometrie des Körpers und/oder in Bezug auf Geschwindigkeiten anzupassen.

2. Das Verfahren gemäß Anspruch 1, wobei bei dem Berechnen (120) des vorhergesagten Röntgenbildes eine Modifikation des Modells, die auf einem Röntgenbild eines vorherigen oder nachfolgenden Zeitpunkts basiert, einbezogen wird.

3. Das Verfahren gemäß Anspruch 2, wobei das Modell für einen nachfolgenden Zeitpunkt der Mehrzahl von Zeitpunkten erst berechnet (110) wird, wenn die Modifikation des Modells, die auf einem Röntgenbild des vorherigen Zeitpunkts basiert, durchgeführt ist.

4. Das Verfahren gemäß einem der Ansprüche 1 bis 3, wobei zumindest ein Teil der Merkmale durch Röntgen-Marker gebildet werden.

5. Das Verfahren gemäß einem der Ansprüche 1 bis 4, wobei zumindest ein Teil der Merkmale durch Konturen von Komponenten des Körpers gebildet werden.

6. Das Verfahren gemäß einem der Ansprüche 1 bis 5, ferner umfassend Berechnen (150) einer durch die Deformation des Körpers verursachten Translation und/oder Rotation zumindest eines Teils des Körpers basierend auf dem Unterschied zwischen den vorausgesagten und den gemessenen Positionen der Merkmale, wobei die Modifikation des Modells auf der berechneten Translation und/oder der berechneten Rotation zumindest eines Teils des Körpers basiert.

7. Das Verfahren gemäß einem der Ansprüche 1 bis 6, wobei morphologische Operatoren zugelassen werden, die sich aus einer Linearkombination von Deformationen ergeben die für vorhergehende oder nachfolgende Zeitpunkte der Mehrzahl von Zeitpunkten berechnet wurden.

8. Das Verfahren gemäß Anspruch 7, wobei unterschiedliche Linearkombinationen für unterschiedliche Merkmale zugelassen werden.

9. Das Verfahren gemäß einem der Ansprüche 1 bis 8, wobei das a-priori-Wissen über die Deformation und die berechneten morphologischen Operatoren genutzt werden, um Zwangskräfte zu berechnen, die auf den Körper einwirken, wobei die numerische Simulation auf den Zwangskräften basiert.

10. Das Verfahren gemäß einem der Ansprüche 1 bis 9, wobei das Verfahren ein Berechnen (145) eines dreidimensionalen Verschiebungsvektors für die Merkmale durch geometrische Rückprojektion der Merkmale umfasst, wobei die Modifikation des Modells auf dem dreidimensionalen Verschiebungsvektor basiert.

11. Das Verfahren gemäß einem der Ansprüche 1 bis 10, wobei für jeden Zeitpunkt der Mehrzahl von Zeitpunkten mehrere vorhergesagte Röntgenbilder und mehrere gemessene Röntgenbildern aus unterschiedlichen Perspektiven genutzt werden.

12. Das Verfahren gemäß einem der Ansprüche 1 bis 11, ferner umfassend Erstellen (170) der gemessenen Röntgenbilder durch Aufnahme eines Szintillators mit einer optischen Hochgeschwindigkeitskamera, wobei die gemessenen Röntgenbilder basierend auf einer Belichtung des Szintillators durch eine gepulste Strahlungsquelle aufgenommen wurden.

13. Das Verfahren gemäß Anspruch 12, wobei die gepulste Strahlungsquelle ein Linearbeschleuniger ist.

14. Programm mit einem Programmcode zum Durchführen des Verfahrens gemäß einem der Ansprüche 1 bis 11, wenn der Programmcode auf einem Computer, einem Prozessor, einem Kontrollmodul oder einer programmierbaren Hardwarekomponente ausgeführt wird.

## Claims

1. A method for time-resolved calculation of a deformation of a body, the method comprising:
calculating (110) a model of the body during the deformation, wherein the model of the body during the deformation is calculated (110) based on an expected force application to the body during the deformation, wherein the deformation of the body is calculated by a numerical simulation based on a priori knowledge about the deformation and based on calculated morphological operators;
calculating (120) a predicted X-ray image for the body for a plurality of time points during the deformation based on the model;
obtaining (130) one measured X-ray image of the body each for the time points during the deformation;
modifying (140) the model based on the predicted X-ray images and the measured X-ray images,
wherein the model is modified (140) based on a difference between predicted positions of features on the predicted X-ray images and measured positions of corresponding features on the measured X-ray images, the modification (140) of the model being directed to reduce the difference between the predicted positions of the features on the predicted X-ray images and the measured positions of the corresponding features on the measured X-ray images over the plurality of time points; and
calculating (160) the morphological operators for the deformation of the body based on the difference between the predicted and the measured positions of the features, wherein the modification of the model is based on the calculated morphological operators for the deformation of the body,
wherein the a priori knowledge and the calculated morphological operators are used to adjust input parameters of the numerical simulation with respect to properties of a material of the body, with respect to acting forces, with respect to a geometry of the body, and/or with respect to velocities.

2. The method of claim 1, wherein calculating (120) the predicted X-ray image comprises a modification of the model which is based on an X-ray image of a previous or subsequent time point.

3. The method of claim 2, wherein the model for a subsequent time point of the plurality of time points is calculated (110) only when the modification of the model which is based on an X-ray image of the previous time point is performed.

4. The method according to any one of claims 1 to 3, wherein at least some of the features are formed by X-ray markers.

5. The method of any one of claims 1 to 4, wherein at least some of the features are formed by contours of components of the body.

6. The method of any one of claims 1 to 5, further comprising calculating (150) a translation and/or rotation of at least one part of the body caused by the deformation of the body based on the difference between the predicted and the measured positions of the features, wherein the modification of the model is based on the calculated translation and/or the calculated rotation of at least one part of the body.

7. The method of any one of claims 1 to 6, wherein morphological operators are admitted that result from a linear combination of deformations calculated for previous or subsequent time points of the plurality of time points.

8. The method of claim 7, wherein different linear combinations are admitted for different features.

9. The method of any one of claims 1 to 8, wherein the a priori knowledge of the deformation and the calculated morphological operators are used to calculate constraining forces acting on the body, wherein the numerical simulation is based on the constraining forces.

10. The method of any one of claims 1 to 9, wherein the method comprises calculating (145) a three-dimensional displacement vector for the features by geometrically back-projecting the features, wherein the modification of the model is based on the three-dimensional displacement vector.

11. The method of any one of claims 1 to 10, wherein, for each time point of the plurality of time points, a plurality of predicted X-ray images and a plurality of measured X-ray images from different perspectives are used.

12. The method of any one of claims 1 to 11, further comprising producing (170) the measured X-ray images by capturing a scintillator with a high-speed optical camera, wherein the measured X-ray images were captured based on an exposure of the scintillator by a pulsed radiation source.

13. The method of claim 12, wherein the pulsed radiation source is a linear accelerator.

14. A program having a program code for executing the method of any one of claims 1 to 11, when the program code is executed on a computer, a processor, a control module or a programmable hardware component.

## Revendications

1. Procédé de calcul à résolution temporelle d'une déformation d'un corps, le procédé comprenant le fait de :
calculer (110) un modèle du corps pendant la déformation, le modèle du corps pendant la déformation étant calculé (110) sur la base d'une application de force prévue sur le corps pendant la déformation, la déformation du corps étant calculée par une simulation numérique sur la base d'une connaissance a priori de la déformation et sur la base d'opérateurs morphologiques calculés ;
calculer (120) une image radiographique prédite pour le corps pour une pluralité d'instants pendant la déformation sur la base du modèle ;
obtenir (130) une image radiographique mesurée du corps pour chacun des instants pendant la déformation ;
modifier (140) le modèle sur la base des images radiographiques prédites et des images radiographiques mesurées,
dans lequel le modèle est modifié (140) sur la base d'une différence entre des positions prédites de caractéristiques sur les images radiographiques prédites et des positions mesurées de caractéristiques correspondantes sur les images radiographiques mesurées, la modification (140) du modèle étant destinée à réduire la différence entre les positions prédites des caractéristiques sur les images radiographiques prédites et les positions mesurées des caractéristiques correspondantes sur les images radiographiques mesurées sur la pluralité d'instants ; et
calculer (160) les opérateurs morphologiques pour la déformation du corps sur la base de la différence entre les positions prédites et mesurées des caractéristiques, la modification du modèle étant basée sur les opérateurs morphologiques calculés pour la déformation du corps,
dans lequel la connaissance a priori et les opérateurs morphologiques calculés sont utilisés pour ajuster des paramètres d'entrée de la simulation numérique en ce qui concerne des propriétés d'un matériau du corps, en ce qui concerne des forces agissantes, en ce qui concerne une géométrie du corps et/ou en ce qui concerne des vitesses.

2. Procédé selon la revendication 1, le calcul (120) de l'image radiographique prédite comprenant une modification du modèle basée sur une image radiographique d'un instant précédent ou suivant.

3. Procédé selon la revendication 2, le modèle pour un instant suivant de la pluralité d'instants n'étant pas calculé (110) tant que la modification du modèle basée sur une image radiographique de l'instant précédent n'est pas effectuée.

4. Procédé selon l'une des revendications 1 à 3, dans lequel au moins une partie des caractéristiques sont formées par des marqueurs radiographiques.

5. Procédé selon l'une des revendications 1 à 4, dans lequel au moins une partie des caractéristiques sont formées par des contours de composants du corps.

6. Procédé selon l'une des revendications 1 à 5, comprenant en outre le fait de calculer (150) une translation et/ou une rotation d'au moins une partie du corps provoquée par la déformation du corps sur la base de la différence entre les positions prédites et mesurées des caractéristiques, la modification du modèle étant basée sur la translation calculée et/ou la rotation calculée d'au moins une partie du corps.

7. Procédé selon l'une des revendications 1 à 6, dans lequel des opérateurs morphologiques sont admis qui résultent d'une combinaison linéaire de déformations calculées pour des instants précédents ou suivants de la pluralité d'instants.

8. Procédé selon la revendication 7, dans lequel de différentes combinaisons linéaires sont admises pour différentes caractéristiques.

9. Procédé selon l'une des revendications 1 à 8, dans lequel la connaissance a priori de la déformation et les opérateurs morphologiques calculés sont utilisés pour calculer des forces de contrainte agissant sur le corps, la simulation numérique étant basée sur les forces de contrainte.

10. Procédé selon l'une des revendications 1 à 9, le procédé comprenant le fait de calculer (145) un vecteur de déplacement tridimensionnel pour les caractéristiques par rétro-projection géométrique des caractéristiques, la modification du modèle étant basée sur le vecteur de déplacement tridimensionnel.

11. Procédé selon l'une des revendications 1 à 10, dans lequel, pour chaque instant de la pluralité d'instants, plusieurs images radiographiques prédites et plusieurs images radiographiques mesurées à partir de perspectives différentes sont utilisées.

12. Procédé selon l'une des revendications 1 à 11, comprenant en outre le fait de créer (170) les images radiographiques mesurées en capturant un scintillateur avec une caméra optique à grande vitesse, dans lequel les images radiographiques mesurées ont été capturées sur la base d'une exposition du scintillateur à une source de rayonnement pulsée.

13. Procédé selon la revendication 12, la source de rayonnement pulsée étant un accélérateur linéaire.

14. Programme présentant un code de programme pour réaliser le procédé selon l'une des revendications 1 à 11 lorsque le code de programme est exécuté sur un ordinateur, un processeur, un module de contrôle ou un composant matériel programmable.
